# EUROPEAN PATENT SPECIFICATION

(11) **EP 2 928 316 B1**
(45) Date of publication and mention of the grant of the patent: **01.08.2018**
(21) Application number: 13824371.2
(22) Date of filing: 09.12.2013
(51) Int. Cl.: A23G 9/08, A23G 9/30

(54) **APPARATUS FOR PREPARING REFRIGERATED PRODUCTS**
VORRICHTUNG ZUR HERSTELLUNG VON GEKÜHLTEN PRODUKTEN
APPAREIL POUR PRÉPARER DES PRODUITS RÉFRIGÉRÉS

(30) Priority: 10.12.2012 IT BO20120663
(43) Date of publication of application: 14.10.2015
(73) Proprietor: S.P.M. Drink Systems S.P.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/IB2013/060754
(87) International publication number: WO 2014/091393

(56) References cited:
- WO-A1-2012/032425
- WO-A1-2012/119962
- JP-A- H11 253 105

## Description

### Technical Field

The present invention relates to an apparatus for preparing and dispensing refrigerated products, such as for example water ices, creamy ice creams, sorbets and the like.

### Background Art

Currently, apparatuses which allow to prepare and dispense refrigerated products of the type of traditional water-ices or alternatively creamy products such as ice creams, sorbets, coffee creams and the like are known.

Such known apparatuses generally comprise a tank suitable to contain the product to be prepared and dispensed, wherein a cooling device for cooling the product to the suitable temperature and a mixing device which causes the continuous circulation of the product inside the tank are arranged. The circulation device, comprising for example a screw member driven in rotation according to an axis longitudinal to the tank, is suitable to convey the cooled product towards a front zone, where a dispensing device for the product is arranged. The dispensing device is provided with an obturator element which can be operated by means of an external lever member.

The cooling device generally consists of a coil evaporator arranged inside a tubular housing, substantially cylindrical, arranged according to the horizontal axis of the tank. The cooling device is operated by a refrigerator system, arranged inside a base body of the tank. The refrigerator system requires a suitable ventilation and therefore a fan is arranged inside the base body of the tank suitable to be operated by a relative motor member in order to produce a cooling airflow.

A drawback complained by users in using the mentioned apparatuses is the difference of temperature which is produced between the inside of the tank, kept at a low temperature by the cited cooling device, and the external environment. The difference of temperature between the inside of the tank and the external environment causes condensation and in some cases it produces a layer of ice on the walls of the tank, which is often made of a transparent material. Besides creating an unpleasant aesthetical appearance, it also makes difficult to see the product inside the tank.

Patent application WO2012/119962 discloses an apparatus for preparing refrigerated products provided with a containment tank for the product being prepared insulated by means of thermally insulating walls, so as to reduce the thermal exchange between the external environment and the inside of the same tank. Such solution prevents from wasting a consistent part of the insulating power produced by the tank in the environment and reduces condensation on the external walls of the tank.

Patent application WO2012/032425 discloses an apparatus of the cited type which is provided with a diffuser element, arranged above the tank, for diffusing air moving on the external walls of the tank. The diffuser element shapes a mouth around the upper part of the tank and blows downwards a thin layer of air on the external walls of the tank. A suitable fan creates an airflow inside the diffuser element. The diffuser element is made by a cap which closes the upper part of the tank and shapes a diffusion chamber for the airflow; the cap has a lower edge spaced from the lateral wall of the tank for peripherally shaping the mouth around the upper part of the tank. The fan is housed in a room obtained behind the bottom wall of the tank.

Patent application JP 11 253105 discloses an apparatus for preparing refrigerated products provided with a plurality of containment tanks for relative products, placed side by side. The patent application has the purpose of preventing the occurrence of ice phenomenon due to condensation between the tanks placed side by side without increasing the size of the apparatus. To such purpose, the cooling fan of the condenser of the refrigerator system, arranged inside the base body of the apparatus on which the tanks are mounted, draws the cooling air from a series of inlet openings made in the upper wall of the base body, at the gap between the tanks placed side by side; after having flown along the refrigerator system, the air is expelled through a series of outlets made on the lateral wall of the base body. Therefore, in the gap between the tanks placed side by side an airflow having top-down direction is produced which prevents from freezing of the condensation.

Known solutions do not solve in a satisfying manner, in each operative condition, the problem of preventing condensation or ice on the walls of the tank. Known solutions entail furthermore a greater structural complexity of the apparatus, with relative higher costs.

### Disclosure

The task of the present invention is that of solving the aforementioned drawbacks, devising an apparatus for preparing and dispensing refrigerated products which allows to prevent condensation or ice on the walls of the tank.

A further scope of the present invention is that of providing an apparatus for preparing refrigerated products having a simple conception and a surely reliable functioning, a versatile use, as well as relative economic cost.

The cited scopes are attained, according to the present invention, by the apparatus for preparing refrigerated products according to claim 1. The apparatus for preparing refrigerated products comprises, at the lower edge of external walls of the containment tank for the product being prepared, outlet means for an airflow suitable to flow along the same external walls, moving in bottom-up direction.

In such way, it is possible to prevent condensation phenomenon on the external walls of the tank in each operative condition and consequently to see the product inside the tank.

Another advantage offered by the invention is due to the fact that the airflow flowing along the external walls of the tank in bottom-up direction is supported by natural convection, with a benefit from an energetic point of view.

Said outlet means for an airflow substantially extend along the entire length of said external walls, to direct the output airflow towards all the width of the same walls.

This feature advantageously produces the effect of preventing condensation in a homogeneous manner all over the width of the external walls of the tank.

According to another aspect of the invention, said outlet means for an airflow are in communication with a housing room for a fan suitable to produce a cooling airflow towards actuation members arranged inside a base body on which said tank is mounted.

Such aspect of the invention advantageously provides the airflow flowing along the external walls of the tank in bottom-up direction to be produced by the cooling fan generally being inside the base body of the apparatus, therefore, without requiring neither the use of auxiliary members nor changes to the traditional shape of apparatuses of the field.

Preferably, said outlet means for an airflow comprise a channel which is in communication with said housing room for the cooling fan.

Preferably, said channel is shaped by a profiled element which extends along the lower edge of a relative external wall.

Preferably, said channel is opened at its top at a chink defined between the upper edge of said profiled element and the opposite wall.

Preferably, said chink is extended substantially along the entire length of said profiled element to direct the output airflow to the whole said wall.

According to another aspect of the invention, the containment tank for the product being prepared is insulated through thermally insulating walls, in order to reduce the thermal exchange between the external environment and the inside of the same tank.

This feature advantageously creates a synergy between said insulated walls, which reduce the thermal exchange between the external environment and the inside of the tank, and consequently limit the occurrence of condensation on the external walls of the tank, and the airflow which flows along the same external walls in a bottom-up direction, which completely prevents condensation on the external walls.

Preferably, said thermally insulated walls comprise a first internal wall and a second external wall between which a hermetically closed interspace is defined, in which a low conductivity gas is contained.

### Brief description of Drawings

Details of the invention shall be more apparent from the detailed description of a preferred embodiment of the apparatus for preparing refrigerated products, illustrated for indicative purposes in the attached drawings, wherein:
figure 1 shows a perspective view of the apparatus;
figure 2 shows a perspective view of the apparatus from the rear side, with cut parts for showing internal members of the apparatus;

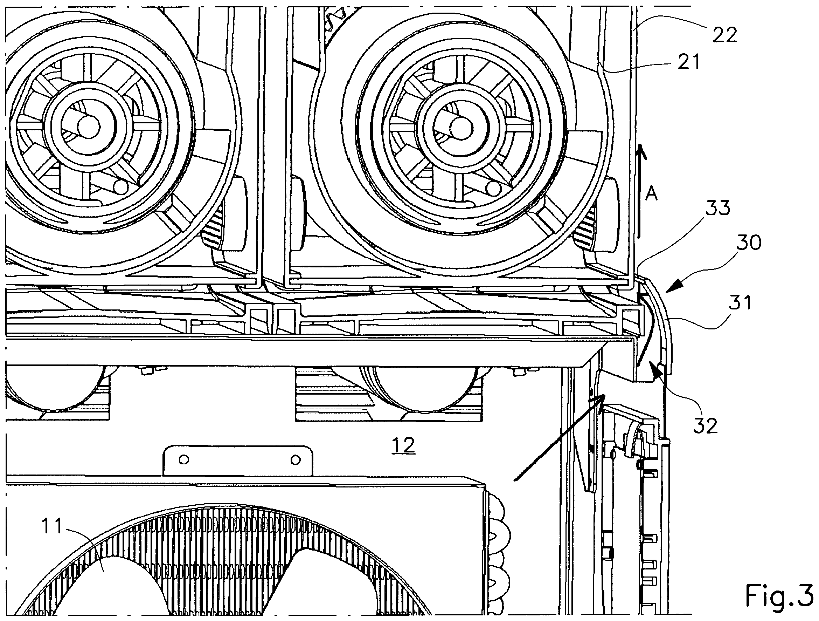

figure 3 shows a magnified view of a part of the apparatus.

### Best Mode

With particular reference to such figures, the apparatus for preparing and dispensing refrigerated products, such as for example ice-waters, creamy ice-creams, sorbets and the like is indicated in its entirety with 1.

The apparatus 1 comprises at least one containment tank 2 for the product to be dispensed, made preferably of transparent plastic material. In the disclosed case, the apparatus has two containment tanks 2 for the product, arranged side by side for preparing and dispensing different products, but it is obviously possible to provide the presence of a different number of such tanks 2, in particular one single tank. The tanks 2, one or more, are mounted on a single base body 10.

Inside each containment tank 2 a mixing device 3 is arranged, in known way, consisting of a screw member driven in rotation according to an axis longitudinal to the tank 2 for producing the continuous circulation of the product inside the same tank 2. Furthermore, inside the tank 2 a cooling device 4 is arranged for cooling the product to the appropriate temperature. The cooling device 4 consists of a coil evaporator arranged inside a tubular body of cylindrical shape, arranged according to the horizontal axis of the tank 2. The cooling device 4 is operated by a cooling system, arranged inside the base body 10 of the tank 2.

A temperature sensor, arranged inside the tank 2 nearby the front wall and preferably on the front wall of the cylindrical body of the cooling device 4, is suitable to control the temperature of the product at the dispensing zone.

The containment tank 2 frontally has a dispensing device 5 provided with an obturator member which can be operated by means of an external lever member 6. The obturator member is slidable inside a cylindrical seat made, with a substantially vertical axis, by a sleeve 7 shaped by the tank 2.

The base body 10 has a substantially prismatic shape and is suitable to contain at its inside the actuation members of the apparatus, known per se and not described in greater detail. Such actuation members comprise in particular the refrigerator system for operating the cooling device 4.

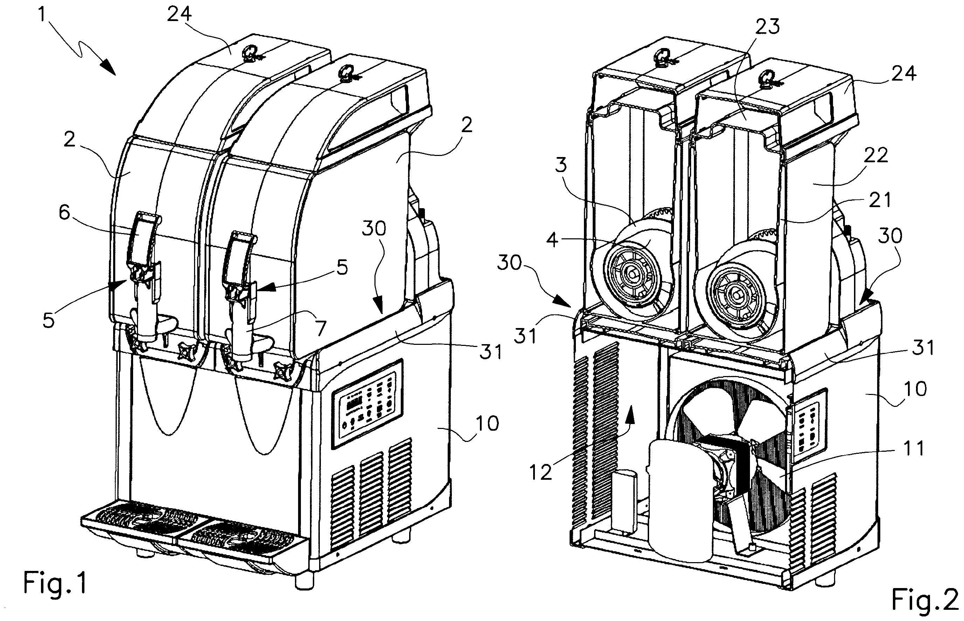

On the rear of such actuation members, a fan 11 is arranged, suitable to be operated by a relative motor member 12 to produce a cooling airflow towards the same actuation members (see fig. 2). The fan 11 is arranged in a room 12 defined inside the base body 10.

The containment tank 2 is insulated through thermally insulating walls in order to reduce the thermal exchange between the external environment and the inside of the same tank 2. Such thermally insulating walls comprise a first internal wall 21 and a second external wall 22 between which a hermetically closed interspace is defined. Preferably, in the said interspace a low conductivity gas is contained, which for simplicity can be made by air.

More precisely, as disclosed in more detail in patent application WO2012/119962, the tank 2 comprises a tank body preferably made in a single piece obtained by moulding of a transparent plastic material, enclosed between a couple of lateral walls; the tank body has a lower portion having the shape of a cylindrical segment extending along a substantially horizontal axis and an upper portion which extends from the above mentioned cylindrical portion. The upper portion of the tank body is provided with an upper opening suitable to be closed by a cap 23. A profiled carter 24 is usefully overlapped to the cap 23, such carter 24 defining an interspace with respect to the same cap 23.

According to the present invention, the apparatus comprises, at the lower edge of the external walls 22 of the tank 2, outlet means 30 for an airflow suitable to flow along the same external walls 22, moving in a bottom-up direction.

More in particular, such outlet means 30 for an airflow comprises a profiled element 31 which extends along the lower edge of a relative external wall 22, in order to create a channel 32 which is in communication with the cited housing room 12 of the cooling fan 11, inside the base body 10. The channel 32 is open at its top at a chick 33 shaped between the upper edge of the profiled element 31 and the opposite wall 22. The chick 33 is substantially extended along the entire length of the profiled element 31 in order to direct the output airflow towards the whole wall 22.

The functioning of the apparatus for preparing and dispensing refrigerated products, such as water-ices, creamy ice-creams, sorbets and the like, is easy to understand from the preceding description.

After having introduced the product in the tank 2, through the upper opening, the preparation cycle is operated. In particular, the cooling device 4 is automatically operated, setting the suitable working temperatures, and the screw member of the mixing device 3 is driven in rotation at a predetermined speed. The suitable temperature sensor, arranged inside the tank 2 preferably on the front wall of the cylindrical body of the cooling device 4, periodically controls the temperature of the product. When it is required, the dispensing of the product is performed by operating the lever member of the dispensing device 5 in opening configuration.

At the same time, the outlet means 30, arranged at the lower edge of the external walls 22 of the tank 2, feed an airflow which flows in a continuous way along the same external walls 22, moving in bottom-up direction. In practice, the air jet produced by the cooling fan 11 is partially conveyed in the channels 32 defined by the profiled elements 31 and, coming out from the upper chink 33, produces the cited airflow.

The possible presence of insulated walls of the containment tank 2 of the product allows to limit the thermal dispersion between the inside of the tank, maintained at a low temperature by the cooling device of the product in preparation, and the external environment. In such way, a synergy is created between such insulated walls, which reduce the thermal exchange between the external environment and the inside of the tank and as a consequence limit the occurrence of condensation on the external walls of the tank, and the airflow which flows along the same external walls in a bottom-up direction, which completely prevents condensation.

The apparatus attains to the scope of operating in an optimal manner the preparation and the dispensing of refrigerated products, such as water-ices, creamy ice-creams, sorbets and the like, preventing the occurrence of condensation or ice on the walls of the tank, made of transparent material. This ensures a pleasant aesthetical appearance and makes always possible to see the product inside the tank.

Such results is obtained thanks to the idea of directing an airflow along the external walls of the tank, moving in a bottom-up direction. Such bottom-up airflow is supported by natural convection.

A prerogative of the invention is that of not requiring members suitably provided for producing such airflow but of exploiting for such purpose the cooling fan usually being inside the apparatus. Therefore, auxiliary members are not necessary, for example a dedicated outlet fan for the airflow, neither changes to the traditional structure of apparatuses of the field.

The use of the airflow produced by the traditional cooling fan of the apparatus, for the purpose of preventing condensation, offers in addition the advantage of obtaining a preheating of the same airflow without additional costs, with benefit for the effectiveness of its action.

The apparatus described for indicative purpose is susceptible of numerous modifications and variants according to the different exigencies.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing refrigerated products, comprising at least one containment tank (2) suitable to contain a product to be prepared; a mixing device (3) arranged inside said tank (2) and suitable to cause the continuous circulation of the product inside the same tank (2), for conveying the product towards a frontal zone of said tank (2); a cooling device (4) arranged inside said tank (2) for cooling the said product; a dispensing device (5) of the product, arranged at the said frontal zone of the containment tank (2), **characterized in that** it comprises, at the lower edge of external walls (22) of said tank (2), outlet means (30) of an airflow (A), said airflow (A) being suitable to flow along the same external walls (22), moving in bottom-up direction;
wherein said outlet means (30) of an airflow extend substantially for the entire length of the said external walls (22), to direct the output airflow towards all the width of the same walls (22) and said outlet means (30) of an airflow are in communication with a housing room (12) of a fan (11) suitable to produce a cooling airflow towards actuation members arranged inside a base body (10) on which said tank (2) is mounted, so that the airflow produced by said fan (11) is pre-heaten by said actuation members and conveyed in said outlet means (30) of an airflow (A).

2. Apparatus according to claim 1, **characterized in that** said outlet means (30) of an airflow comprise a profiled element (31) which extends along the lower edge of a relative external wall (22), so as to shape a channel (32) which is in communication with the said housing room (12) of the cooling fan (11).

3. Apparatus according to claim 2, **characterized in that** said channel (32) is open at its top at a chink (33) defined between the upper edge of said profiled element (31) and the opposite wall (22).

4. Apparatus according to claim 3, **characterized in that** said chink (33) is substantially extended for the entire length of said profiled element (31) to direct the output airflow towards the whole said wall (22).

5. Apparatus according to one of the previous claims, **characterized in that** said containment tank (2) is insulated through thermally insulated walls (21, 22) so as to reduce the thermal exchange between the external environment and the inside of the same tank (2).

6. Apparatus according to claim 5, **characterized in that** said thermally insulated walls (21, 22) comprise a first internal wall (21) and a second external wall (22) between which a hermetically closed interspace is defined, in which a low thermal conductivity gas is contained.

## Patentansprüche

1. Vorrichtung zur Herstellung von gekühlten Produkten, die mindestens einen Behältertank (2) umfassen, der geeignet ist, um ein aufzubereitendes Produkt zu enthalten; eine Mischeinrichtung (3), die innerhalb des Tanks (2) angeordnet ist und dazu geeignet ist, die kontinuierliche Zirkulation des Produktes innerhalb desselben Tanks (2) zu verursachen, um das Produkt zum vorderen Bereich des Tanks (2) zu fördern; eine Kühleinrichtung (4), die innerhalb des Tanks (2) angeordnet ist, um das Produkt zu kühlen; eine Abgabeeinrichtung (5) des Produktes, die an diesem vorderen Bereich des Behältertanks (2) angeordnet ist, **dadurch gekennzeichnet, dass** sie an einem unteren Rand der Außenwände (22) des Tanks (2) Auslassmittel (30) eines Luftstromes (A) umfasst, wobei der Luftstrom (A) dazu geeignet ist, entlang derselben Außenwände (22) zu strömen, bewegend in Richtung von unten nach oben;
wobei sich die Auslassmittel (30) eines Luftstromes im Wesentlichen über die gesamte Länge der Außenwände (22) erstrecken, um den Ausgabeluftstrom zur gesamten Breite derselben Wände (22) auszurichten, und die Auslassmittel (30) eines Luftstromes in Kommunikation mit einem Aufnahmeraum (12) eines Gebläses (11) sind, das dazu geeignet ist, einen Kühlluftstrom zu den Betätigungsgliedern herzustellen, welche innerhalb eines Grundkörpers (10) angeordnet sind, auf dem der Tank (2) montiert ist, so dass der durch das Gebläse (11) hergestellte Luftstrom durch die Betätigungsglieder vorgeheizt und in den Auslassmitteln (30) eines Luftstromes (A) befördert wird.

2. Vorrichtung nach Anspruch 1, **dadurch gekennzeichnet, dass** die Auslassmittel (30) eines Luftstromes ein profiliertes Element (31) umfassen, das sich entlang des unteren Randes einer relativen Außenwand (22) erstreckt, um einen Kanal (32) zu bilden, der in Kommunikation mit dem Aufnahmeraum (12) des Kühlgebläses (11) ist.

3. Vorrichtung nach Anspruch 2, **dadurch gekennzeichnet, dass** der Kanal (32) oben an einem Schlitz (33) offen ist, der zwischen dem oberen Rand des profilierten Elements (31) und der gegenüberliegenden Wand (22) definiert ist.

4. Vorrichtung nach Anspruch 3, **dadurch gekennzeichnet, dass** sich der Schlitz (33) im Wesentlichen über die gesamte Länge des profilierten Elements (31) erstreckt, um den Ausgabeluftstrom zur gesamten Wand (22) auszurichten.

5. Vorrichtung nach einem der vorhergehenden Ansprüche, **dadurch gekennzeichnet, dass** der Behältertank (2) durch thermisch isolierte Wände (21, 22) isoliert wird, um den Wärmeaustausch zwischen der Außenumgebung und der Innenseite des Tanks (2) zu verringern.

6. Vorrichtung nach Anspruch 5, **dadurch gekennzeichnet, dass** die thermisch isolierten Wände (21, 22) eine erste Innenwand (21) und eine zweite Außenwand (22) umfassen, zwischen den einen hermetisch verschlossenen Zwischenraum definiert ist, in dem ein Gas mit niedriger Wärmeleitfähigkeit enthalten ist.

## Revendications

1. Appareil pour préparer des produits réfrigérés, comprenant au moins un réservoir de contenance (2) apte à contenir un produit à préparer; un dispositif de mélange (3) disposé à l'intérieur dudit réservoir (2) et apte à provoquer la circulation continue du produit à l'intérieur du même réservoir (2), pour acheminer le produit vers une zone frontale dudit réservoir (2); un dispositif de refroidissement (4) disposé à l'intérieur dudit réservoir (2) pour refroidir ledit produit; un dispositif de distribution (5) du produit, disposé dans ladite zone frontale du réservoir de contenance (2), **caractérisé en ce qu'**il comprend, au bord inférieur des parois externes (22) dudit réservoir (2), des moyens de sortie (30) d'un débit d'air (A), ledit débit d'air (A) étant apte à couler le long des mêmes parois externes (22), en se déplaçant dans une direction de bas en haut;
dans lequel lesdits moyens de sortie (30) d'un débit d'air se prolongent substantiellement sur toute la longueur desdits parois externes (22), pour diriger le débit d'air de sortie vers toute la largeur des mêmes parois (22) et lesdits moyens de sortie (30) d'un débit d'air sont en communication avec une chambre de logement (12) d'un ventilateur (11) apte à produire un débit d'air de refroidissement vers des composants d'actionnement disposés à l'intérieur d'un corps de base (10) sur lequel ledit réservoir (2) est monté, de manière à ce que le débit d'air produit par ledit ventilateur (11) est préchauffé par lesdits composants d'actionnement et est acheminé dans lesdits moyens de sortie (30) d'un débit d'air (A).

2. Appareil selon la revendication 1, **caractérisé en ce que** lesdits moyens de sortie (30) d'un débit d'air comprennent un élément profilé (31) se prolongeant le long du bord inférieur d'une paroi externe relative (22), de manière à former un canal (32) qui est en communication avec ladite chambre de logement (12) du ventilateur de refroidissement (11).

3. Appareil selon la revendication 2, **caractérisé en ce que** ledit canal (32) est ouvert en son sommet dans une fente (33) définie entre le bord supérieur dudit élément profilé (31) et la paroi opposée (22).

4. Appareil selon la revendication 3, **caractérisé en ce que** ladite fente (33) se prolonge substantiellement sur toute la longueur dudit élément profilé (31) pour diriger le débit d'air de sortie vers toute ladite paroi (22).

5. Appareil selon l'une quelconque des revendications précédentes, **caractérisé en ce que** ledit réservoir de contenance (2) est isolé par le biais de parois isolées thermiquement (21, 22), de manière à réduire l'échange de chaleur entre l'environnement externe et l'intérieur du même réservoir (2).

6. Appareil selon la revendication 5, **caractérisé en ce que** lesdits parois isolées thermiquement (21, 22) comprennent une première paroi interne (21) et une seconde paroi externe (22) entre lesquels est défini un interstice fermé hermétiquement, dans lequel est contenu un gaz avec une conductibilité thermique réduite.
